# EUROPEAN PATENT SPECIFICATION

(11) **EP 2 936 111 B1**
(45) Date of publication and mention of the grant of the patent: **04.08.2021**
(21) Application number: 13828823.8
(22) Date of filing: 17.12.2013
(51) Int. Cl.: G01M 17/02, G01N 21/21

(54) **METHOD AND APPARATUS FOR CONTROLLING TYRES OR RELATED SEMI-FINISHED PRODUCTS IN A PRODUCTION LINE**
VERFAHREN UND VORRICHTUNG REIFEN ZUR KONTROLLE VON REIFEN ODER VERWANDTEN HALBERZEUGNISSEN IN EINER PRODUKTIONSLINIE
PROCÉDÉ ET APPAREIL DE CONTRÔLE DE PNEUMATIQUES OU DE PRODUITS SEMI-FINIS ASSOCIÉS SUR UNE LIGNE DE PRODUCTION

(30) Priority: 21.12.2012 IT MI20122218; 28.03.2013 US 201361806153 P
(43) Date of publication of application: 28.10.2015
(73) Proprietor: Pirelli Tyre S.p.A., 20126 Milano (IT)
(72) Inventor: MONTRUCCHIO, Bartolomeo, 10129 Torino (IT); GALLO, Marco, 14015 San Damiano d'Asti (AT) (IT); BOFFA, Vincenzo, 20126 Milano (IT)
(74) Representative: Tirloni, Bartolomeo
(86) International application number: PCT/IB2013/061016
(87) International publication number: WO 2014/097133

(56) References cited:
- WO-A1-2011/115256
- H.G. Berry ET AL: "Measurement of the Stokes parameters of light", APPLIED OPTICS, 1 December 1977 (1977-12-01), pages 3200-3205, XP055078463, DOI: http://dx.doi.org/10.1364/AO.16.003200 Retrieved from the Internet: URL:http://www.opticsinfobase.org/DirectPD FAccess/49BE9024-B02E-C5EA-D3CEC859184969A D_21578/ao-16-12-3200.pdf?da=1&id=21578&se q=0&mobile=no [retrieved on 2013-09-10]

## Description

The present invention relates to a method and an apparatus for controlling tyres or related semi-finished products in a tyre production line, in particular a method and an apparatus for controlling the possible presence of irregularities and/or foreign bodies on the (or in proximity to the) surface of a tyre or of a semi-finished product thereof.

The present invention also relates to a process and a tyre production line comprising respectively the aforesaid method and the aforesaid apparatus for controlling tyres or related semi-finished products.

By "tyre" it is intended the vulcanised tyre, i.e. after vulcanisation.

By "semi-finished product" it is intended both a precursor of the tyre in one step of the production process, such as the green tyre, i.e. the semi-finished product at the end of the different building steps and before vulcanisation, and elements used during the process for producing the tyre which contribute to forming the tyre in any step of the production process, and which typically are formed by means of elongated elements, strips and/or rubber-covered plies (possibly reinforced with textile or metallic material) arranged and/or to be arranged on one or more building supports.

In the scope of the processes for producing and building tyres for vehicle wheels, the need is perceived to carry out quality controls on the products obtained, with the object of preventing defective tyres from being sold and/or of progressively adjusting the apparatuses and the machinery employed, in a manner so as to improve and optimise the execution of the operations performed in the production process.

Such quality controls include, for example, those carried out by human operators who dedicate a pre-established time period, e.g. comprised between 30 s and 60 s, to a visual and tactile examination of the tyre; if, in light of one's experience and sensitivity, the operator should suspect that the tyre does not respect certain quality standards, the tyre itself is subjected to further controls, by means of suitable equipment, for the purpose of evaluating possible structural and/or quality deficiencies.

Methods are known for the optical inspection of the external shape of a tyre.

For example, the patent document JP2011-196741 describes a method for the optical inspection of the external shape of a tyre comprising irradiating polarised light on the surface of the tyre, receiving reflected light of the polarised light from the surface of the tyre by using a polarisation video camera, and detecting the non-uniformities on the surface of the tyre from the analysis of the change in the polarisation angle of the reflected light. For such purpose, a polarisation camera is used comprising a polariser over at least three or more different directions.

The patent document JP2010261724 describes an apparatus for the inspection of the internal surface of a tyre which includes means for the irradiation of polarised light on the two opposite sides of the internal surface of a tyre and a camera provided with means for the polarisation of the light reflected by the internal surface of the tyre in order to prevent the formation of rings.

The article "Measurement of the Stokes parameters of light", by H.G. Berry et al., APPLIED OPTICS, 1 December 1977 (1977-12-01), pages 3200-3205, XP055078463, discloses a measuring system for determining the state of polarization of a beam of light in terms of its Stokes parameters.

The Applicant has addressed the problem of providing that the quality controls in the production of tyres can be at least partly performed by means of reliable optical inspection methods, so as to be able to provide a technical aid to human operators, and/or to automate the recognition of at least some flaws.

The Applicant has observed that in order for the quality control to be industrially employed in a tyre production line, it is necessary that the control itself be carried out in limited times, less than or corresponding to the normal times used by the conventional methods for controlling quality.

The Applicant has realised that the known methods and apparatuses for the optical inspection require a step of acquisition of the light reflected by the surface of the tyre, which involves considerable time consumption.

For example, the Applicant has realised that the optical inspection method described in the abovementioned document JP2011-196741 necessarily provides for a minimum of three acquisitions of the light reflected by each portion of tyre on respectively three different states of linear polarisation. Since each single acquisition on a specific polarisation state requires considerable time consumption (in the context of the process and the tyre production line), especially if the control is conducted on each single tyre or semi-finished product, there follows a disadvantageous lengthening of the production times.

The Applicant has also realised that the known methods and apparatuses (such as that described in the abovementioned document JP2010261724) do not ensure the desired accuracy and/or sensitivity in detecting possible irregularities in the surface shape of a tyre and/or non-uniformities of the structure of the surface material of a tyre and/or presence of foreign bodies on the surface of a tyre.

The Applicant has found that using one or more components of a sub-selection of components of the Stokes vector of the light reflected by the surface of a tyre or a semi-finished product, it is possible to develop a method and an apparatus for controlling the tyre that can be implemented and respectively inserted in a tyre production line, without substantially altering the productivity of the production line itself.

In a first aspect, the invention relates to a method for controlling tyres or semi-finished products in a tyre production line.

In accordance with the present invention it is provided to:
- light with a light radiation at least one portion of the surface of a tyre or semi-finished product to be inspected;
- detect the optical intensity of the light radiation reflected by said surface portion on a number N of pairs of polarisation states belonging to a group of three pairs of polarisation states corresponding to three pairs of points on Poincaré sphere, the three pairs of points being located at the opposite ends of three respective diameters of the Poincaré sphere orthogonal to each other, said number N being equal to 1 or 2 or 3;

- calculate, on said surface portion, a number M of values representative of an equivalent number of components of the Stokes vector belonging to a subgroup of three components of the Stokes vector comprising a second component, Q, equal to the, or a function of the, difference of the two optical intensities of the light radiation reflected by the surface portion on the first pair of polarisation states, a third component, U, equal to the, or a function of the, difference of the two optical intensities of the light radiation reflected by the surface portion on the second pair of polarisation states and a fourth component, V, equal to the, or a function of the, difference of the two optical intensities of the light radiation reflected by the surface portion on the third pair of polarisation states, wherein said number M is equal to 1 or 2 or 3;
- generate, for said surface portion, a respective control signal representative of each of said values representative of said components of the Stokes vector;
- analyse said respective control signal on said surface portion for detecting the possible presence of surface flaws (e.g. irregularities and/or foreign bodies on the, or in proximity to the surface portion).

In a second aspect, the invention relates to an apparatus for controlling tyres or semi-finished products in a tyre production line.

In accordance with the present invention the apparatus comprises:
- a member for moving a tyre or a semi-finished product having a support plane, preferably horizontal and preferably adapted to rotate around an axis perpendicular to itself;
- a source adapted to emit a light radiation for lighting a surface portion of the tyre or semi-finished product, when lying on the support plane, and, at a distance from said source, a detection system adapted to detect the optical intensity of the light radiation reflected by said surface portion on a number N of pairs of polarisation states belonging to a group of three pairs of polarisation states corresponding to three pairs of points on Poincaré sphere, the three pairs of points being located at the opposite ends of three respective diameters of the Poincaré sphere orthogonal to each other, said number N being equal to 1 or 2 or 3, and to generate a respective detection signal; and

- a processing unit adapted to receive from the detection system said detection signal and configured for the following functions:
   - calculating on said surface portion a number M of values representative of an equivalent number of components of the Stokes vector belonging to a subgroup of three components of the Stokes vector comprising a second component, Q, equal to the, or a function of the, difference of the two optical intensities of the light radiation reflected by the surface portion on the first pair of polarisation states, a third component, U, equal to the, or a function of the, difference of the two optical intensities of the light radiation reflected by the surface portion on the second pair of polarisation states and a fourth component, V, equal to the, or a function of the, difference of the two optical intensities of the light radiation reflected by the surface portion on the third pair of polarisation states, wherein said number M is equal to 1 or 2 or 3;
   - generating, for said surface portion, a respective control signal representative of each of said M values representative of said components of the Stokes vector and
   - analysing said respective control signal on said surface portion for detecting the possible presence of surface flaws.

In a third aspect, the invention relates to a process for producing tyres comprising at least one operation for building green tyres, an operation for vulcanising green tyres and an operation for controlling tyres or semi-finished products in accordance with the method of the first aspect of the present invention.

In a fourth aspect, the invention relates to a tyre production line comprising at least one work station, i.e. an area structured and configured for carrying out at least one operation for building green tyres, at least one vulcanisation station, i.e. an area structured and configured for carrying out a green tyres vulcanisation operation, and at least one control station comprising an apparatus for controlling tyres or semi-finished products according to the apparatus of the second aspect of the present invention. The Applicant has found that for the purpose of detecting flaws on the surface of a tyre or a semi-finished product, the Stokes vector of such surface has proven particularly significant, in at least one, or more, of its components selected within the aforesaid subgroup of three components. The Applicant observes that generally the components of the Stokes vector (in brief "the Stokes components") define exactly one state of polarisation, even for light not completely polarised, i.e. one polarisation state is perfectly well-known when all the Stokes components are known. The method for testing described in JP2011-196741, which also detects the radiation reflected on at least three different states of linear polarisation (e.g. 0°, 90° and 135°), nevertheless does not use any Stokes component, but rather is limited to determining the (linear) polarisation angle of the reflected light starting from a polarised incident radiation (linearly, for example at 45°).

The Applicant has found that the use of the Stokes vector in one or more of its three aforesaid components, Q, U and V, allows obtaining significant information with the least number of acquisitions possible, at the very least with only two acquisitions.

In addition, the use of the Stokes vector in one or more of the three aforesaid components, Q, U and V, allows the use of incident light, even (and rather preferably) not polarised, unlike the known methods which require polarised incident light.

With reference to at least one of the aforesaid aspects, the following preferred solutions are provided.

The terms 'optical', 'light' and the like make reference to a spectrum of the electromagnetic radiation which has at least one portion falling within an enlarged range of the optical band, and not necessarily falling strictly within the optical band (i.e. 400-700 nm), e.g. such enlarged range of the optical band can range from the ultraviolet to the infrared (e.g. wavelength from 350 nm to 900 nm).

Preferably the light radiation has a spectrum centred in the optical band, e.g. centred around 550 nm. Preferably the spectrum has narrow band, e.g. with width at half height equal to 20 nm (advantageously in such a manner one limits the dependence of the polarisation of the wavelength of the radiation). Alternatively, the light radiation can be broadband (e.g. white light).

The expression "detecting the optical intensity of the light radiation on a polarisation state" indicates detecting the optical intensity of the radiation projected on the polarisation state.

Advantageously the calculation of each value representative of a Stokes component requires a small consumption of computational resources, unlike for example JP2011-196741, where the intensities detected are interpolated with a predefined and parameterised curve of the intensity as a function of the linear polarisation angle and where the maximum point of such interpolated curve is calculated.

Preferably the three pairs of polarisation states are respectively: the horizontal and vertical linear polarisation for the first pair, the linear polarisation at +45° and -45° for the second pair and the right and left circular polarisation for the third pair. Conventionally, such polarisation states will be termed "main polarisation states". It is observed that the reference system selected for defining the aforesaid main polarisation states is arbitrary (in other words, the method is unchanging for any rigid rotation of the six polarisation states on Poincaré sphere). The optical intensity of the light radiation detected on the horizontal and vertical linear polarisation will be indicated with the symbols E1 and E2, respectively, while that detected on the linear polarisation at +45° and -45° and on the right and left circular polarisation will be respectively indicated with the symbols E3, E4, E5 and E6.

In general the Stokes vector is a vector with four components (indicated with the symbols I, Q, U, V) where the first, I=E1+E2, is equal (or proportional) to the sum of the two optical intensities of the light radiation reflected by the surface portion on the first pair of polarisation states, the second, Q=E1-E2, is equal to the difference of the two optical intensities of the light radiation reflected by the surface portion on the first pair of polarisation states, the third, U=E3-E4, is equal to the difference of the two optical intensities of the light radiation reflected by the surface portion on the second pair of polarisation states and the fourth, V=E5-E6, is equal to the difference of the two optical intensities of the light radiation reflected by the surface portion on the third pair of polarisation states. It is observed that the present invention optionally also considers the calculation, in addition to that stated above, of a value representative of the first component of the Stokes vector, I, as discussed as an example hereinbelow.

Preferably said number M of values representative of an equivalent number of Stokes components comprises the value representative of the second component, Q (in which case, E1 and E2 must be detected). Preferably it is provided to detect the optical intensity of the light radiation reflected by said surface portion on the first pair of polarisation states by passing the reflected light radiation through a linear polariser aligned along the horizontal axis and through a linear polariser aligned along the vertical axis, respectively. The two polarisers used respectively for each pair of main polarisation states can be used in time succession (preferably) or simultaneously upon spatial division of the reflected light radiation. Preferably it is provided to detect the optical intensity of the light radiation reflected by said surface portion on the second pair of polarisation states by passing the reflected light radiation through a linear polariser aligned at +45° with respect to the horizontal and through a linear polariser aligned at -45° with respect to the horizontal, respectively.

Preferably it is provided to detect the optical intensity of the light radiation reflected by said surface portion on the third pair of polarisation states by passing the reflected light radiation through (as regards the right circular polarisation) a quarter-wave plate with the fast axis thereof ("fast axis") positioned along the horizontal axis followed, downstream of the plate with respect to the direction of propagation of the light radiation (which thus first crosses the plate and then the polariser), by a linear polariser aligned at +45° with respect to the horizontal axis and, respectively (as regards the left circular polarisation), through a quarter-wave plate with the fast axis thereof positioned along the horizontal axis followed by a linear polariser aligned at -45°with respect to the horizontal axis.

Preferably said number N is equal to 1 and said number M is equal to 1, more preferably the pair of polarisation states on which the optical intensity of the reflected light radiation is detected is the first pair (E1, E2) and said value representative of the Stokes components is representative of the second Stokes component, Q. According to the Applicant, in such a manner with only two acquisitions (e.g. as opposed to three of the patent JP2011-196741), very significant information is obtained.

In an alternative embodiment, said number N of pairs of polarisation states is equal to 2 or 3 and said number M is equal to 2 or 3, wherein said M values representative of the Stokes components comprise the representative value of at least one between the third and the fourth Stokes component, U and V, optionally of both.

Preferably it is further provided to calculate, on said surface portion, a further value representative of a first component of the Stokes vector, I, equal to the, or a function of the, sum of the two optical intensities of the light radiation reflected by the surface portion on the first pair of polarisation states. More preferably said M values representative of the components of the Stokes vector further comprise the value representative of the second component Q (i.e. I, Q and U or I, Q and V or I, Q, U and V). According to the Applicant, advantageously in such a manner one obtains high sensitivity and/or accuracy in the detection of surface flaws, when subjected to a number of acquisitions greater than two.

Preferably it is provided to calculate on said surface portion, as a function of said M (with M equal to 2 or 3), values representative of the Stokes components and said further value representative of the first Stokes component, at least one first polarisation parameter belonging to a group of polarisation parameters consisting of a degree of linear polarisation, DOLP=sqrt(Q²+U²)/I, of a polarisation angle, PSI=0.5*atan(U/Q) and of a degree of circular polarisation, DOCP= V/I. Optionally, the method comprises calculating both DOLP and PSI.

In one embodiment said number N is equal to 3 and said number M is equal to 3. Preferably the method comprises calculating on said surface portion, as a function of said M values representative of the Stokes components and said further value representative of the first Stokes component, PSI, DOCP, DOLP and also a polarisation degree, DOP=sqrt(Q²+U²+V²)/I. According to the Applicant, one or more of the aforesaid polarisation parameters constitute highly significant parameters for identifying surface flaws.

Preferably the light radiation which lights or for lighting at least one surface portion of the tyre or the semi-finished product is not polarised or it is at least partly not polarised.

Preferably in the operation for lighting a portion of the surface the angle formed between the direction of propagation of the light radiation which lights the surface and the normal to the plane locally tangent to the envelope of the surface portion is greater than or equal to 30°, preferably greater than or equal to 45° (e.g. equal to 90°). Advantageously, in such a manner the surface portion produces sensitive effects of polarisation on the light radiation.

Preferably it is provided to detect the optical intensity of the reflected light radiation by means of at least one digital camera (also of linear type) having a digital optical sensor adapted to detect said reflected light radiation and an optical objective with an axis thereof (e.g. the barycentre axis of the objective lenses), where more preferably the angle formed between such axis and the normal to the plane locally tangent to the envelope of the surface portion is smaller than or equal to 50°, preferably smaller than or equal to 30° (e.g. equal to 0°).

Preferably the angle formed by the direction of propagation of the light radiation which lights the portion of the surface and said axis of the objective of the camera is greater than or equal to 40°, preferably greater than or equal to 60° (e.g. equal to 90°).

Preferably said detection system comprises said at least one digital camera and a number 2N of polarisers, each structured for projecting the reflected light radiation on a respective state belonging to said N pairs of polarisation states.

In one embodiment, some of or all the 2N polarisers can be positioned upstream of the camera with respect to the direction of propagation of the reflected light radiation, in a mutually exclusive manner. For example, the detection system can comprise one and only one camera and, placed upstream before the same, a member on which all the 2N polarisers are mounted, such member configured for positioning only one polariser at a time in front of the camera. Preferably in such case said source comprises one and only one light source.

In an alternative and preferred embodiment, the detection system comprises a number 2N of digital cameras, each with a respective polariser different from the other polarisers. The 2N cameras can be angularly uniformly distributed around the circumference of the tyre (also in the green state), and in such case said source comprises a number 2N of light sources, each associated with a respective camera. Alternatively, the 2N cameras are positioned in a single angular position (e.g. one next to the other) and use the same single light source.

Preferably the apparatus comprises (at least) one robotised arm, at whose free end said detection system and said source are mounted.

Preferably it is provided to discretise said surface portion in a finite number of points. In this context, by "point" it is naturally intended a small subsurface portion having finite size, e.g. comparable to a pixel of a digital image of the surface itself, and not a mathematical point having zero size. Preferably it is provided to detect and/or calculate and/or generate a respective control signal and/or analysing the respective control signal, for each point of the surface portion.

Preferably it is provided to create, for each of said M values representative of the Stokes components and/or for each of said polarisation parameters, an image of said surface portion in which each point of the surface is displayed as a function of the respective value of said representative value and/or, respectively, of said polarisation parameter. More preferably each point of the surface is displayed with a colour, or a grey scale, or white or black, as a function of the respective value of said representative value and/or polarisation parameter.

Preferably said processing unit is also configured for driving and controlling said apparatus.

Preferably the station for controlling tyres comprises a pair of the aforesaid apparatuses for controlling tyres in a production line and, interposed between the two apparatuses with reference to the production flow, a machine for tilting the tyre around an axis orthogonal to the cylindrical symmetry axis of the tyre.

Preferably the operation for controlling tyres or semi-finished products comprises controlling a plurality n of tyres or semi-finished products in a predefined time range.

Preferably it is provided, in the same predefined time range, to introduce k tyres or semi-finished products into a production flow, with k=<n, subsequently to the control, and forward n-k tyres or semi-finished products, subsequently to the control, outside said production flow, as a function of the aforesaid respective control signal.

The Applicant deems that in this manner it is possible to obtain, in acceptable times and in a precise and reliable manner, a control of the surface of the tyres or semi-finished products that can be advantageously used for controlling the quality of the tyres or semi-finished products in a production process.

Preferably said control station is provided downstream of said vulcanisation station with respect to the production flow, or said control of tyres in a production process is performed after the vulcanisation of said tyre. In this manner, it is possible to verify the presence of possible surface flaws of the tyre which could have occurred also during or following a vulcanisation operation.

Preferably each of said n-k tyres or semi-finished products forwarded outside the production flow is sent to a verification station for carrying out at least one further analysis on the same tyre or semi-finished product.

In this manner, it is possible to determine with greater accuracy the problems that each tyre or semi-finished product has and it is thus possible to decide, in a more reliable manner, if the same tyre must be definitively discarded.

Preferably said predefined time for controlling the plurality n of tyres or semi-finished products is comprised between about n/5 times and about 5n times a cycle time (defined as the maximum time employed by a semi-finished product to move from a work station). In this manner, the control method according to the invention can be advantageously applied in a line and in a process of production without significantly reducing the productivity of the line itself. Preferably said predefined time corresponds with about n times a cycle time.

Further characteristics and advantages will be clearer from the detailed description of several exemplifying but not exclusive embodiments of a method and an apparatus for controlling tyres or related semi-finished products in a tyre production line, as well as a related process and production line, in accordance with the present invention. Such description will be set forth hereinbelow with reference to the set of drawings, provided only for exemplifying and hence non-limiting purposes, in which:
- figure 1 schematically shows a production line according to the present invention;
- figure 2 shows a schematic diagram, in terms of functional blocks, of an apparatus for controlling tyres in accordance with the present invention;
- figure 3 shows a partially schematic perspective view of an apparatus for controlling tyres in accordance with the present invention;
- figure 4 shows a schematic diagram, in terms of functional blocks, of a control station in accordance with the present invention;
- figure 5 is a visible-light photograph in grey tones, in negative, and without polariser filters of a surface portion of a tyre on which a metallic foreign body was suitably included;
- figures 6, 7 and 8 show a black-and-white image of a surface portion substantially coinciding with that of figure 5 obtained by associating each discrete point of the surface with a value representative respectively of the second, third and fourth Stokes component, Q, U and V, and after thresholding on grey tones;
- figures 9-12 show a black-and-white image of a surface portion substantially coinciding with that of figure 5 obtained by associating, with each discrete point of the surface, a value representative respectively of the degree of linear polarisation, DOLP, of the degree of polarisation, DOP, of the degree of circular polarisation, DOCP, and of the polarisation angle, PSI and after thresholding on the grey tones;
- figure 13 shows a flow diagram of a tyre production process in accordance with the present invention.

With reference to the figures, reference number 1 generally indicates a production line in which an inspection is performed by means of the method and/or the apparatus according to the present invention. In general the same reference number is used for similar elements, even in the modified embodiments thereof.

The production line 1 comprises at least one work station 10, at least one control station 20 and at least one vulcanisation station 30. The production line 1 can also comprise further stations, not illustrated in detail herein.

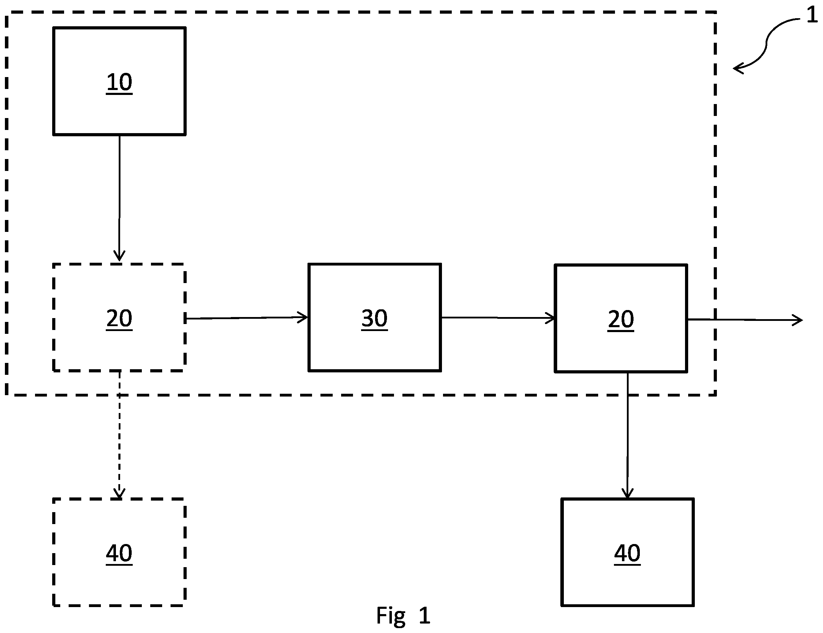

In the embodiment of figure 1, the control station 20 is provided downstream of the vulcanisation station 30 (with reference to the production flow indicated by the arrows), in order to control the tyres after vulcanisation. Optionally (or alternatively, not shown), a further control station 20 (shown in dashed line) is operatively situated downstream of the work station 10 and upstream of the vulcanisation station 30 (in order, for example, to control the green tyres or the semi-finished products).

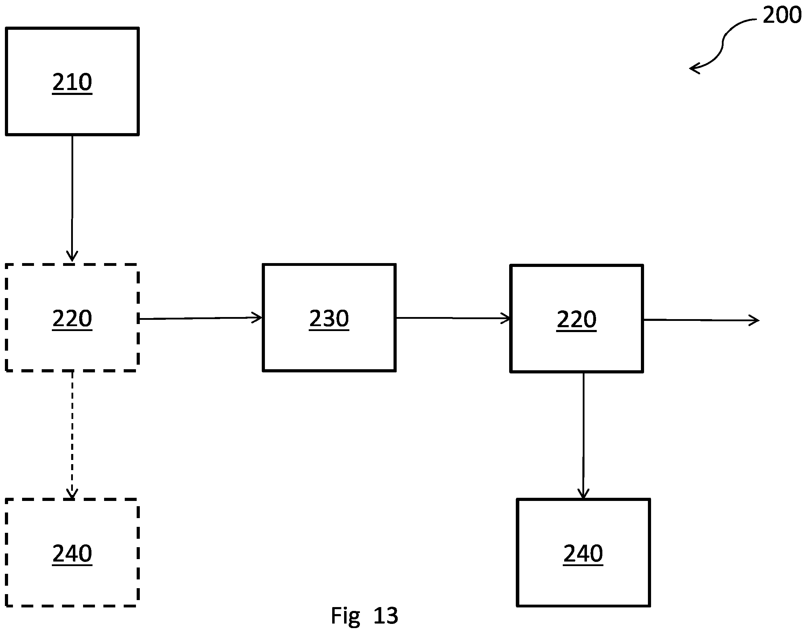

A flow diagram of a process 200 for producing tyres in accordance with the present invention is schematically illustrated in figure 13.

The process 200 comprises at least one operation 210 for building green tyres (typically performed in the aforesaid work station 10), an operation 230 for vulcanising green tyres (typically performed in the aforesaid work station 30 subsequently to the building operation 210) and an operation 220 for controlling tyres or semi-finished products (typically performed in the aforesaid work station 20 subsequently at least to the building operation 210).

The operation 220 for controlling tyres or semi-finished products provides for controlling n tyres or semi-finished products in a predefined time range, for example equal to about n times a cycle time. For example, in the predefined time range, a flow of n tyres or semi-finished products is fed into the inlet of the control station 20. By way of example, the cycle time can be comprised between about 20 s and about 120 s, more preferably between about 60 s and about 90 s.

The following description will make reference to a single tyre or semi-finished product. That described can be applied to each of the n tyres or semi-finished products constituting the entering flow.

Preferably the n tyres or semi-finished products will be sequentially processed, one after the other, by the same devices present in the control station 20.

The control operation provides for lighting with a light radiation at least one portion of the surface of the tyre or semi-finished product; detecting the optical intensity of the light radiation reflected by the surface portion on a number N (with N equal to 1, preferably, or 2 or 3) of pairs of polarisation states belonging to a group of three pairs of polarisation states corresponding to three pairs of points on Poincaré sphere, the three pairs of points being located at the opposite ends of three respective diameters of the Poincaré sphere orthogonal to each other; calculating, on the surface portion, a number M (with M equal to 1, preferably, or 2 or 3) of values representative of an equivalent number of components of the Stokes vector belonging to a subgroup of three components of the Stokes vector comprising a second component, Q, equal to the, or a function of the, difference of the two optical intensities of the light radiation reflected by the surface portion on the first pair of polarisation states, a third component, U, equal to the, or a function of the, difference of the two optical intensities of the light radiation reflected by the surface portion on the second pair of polarisation states and a fourth component, V, equal to the, or a function of the, difference of the two optical intensities of the light radiation reflected by the surface portion on the third pair of polarisation states; generating, for the surface portion, a respective control signal representative of each value representative of the components of the Stokes vector and analysing such respective control signal on the surface portion for detecting the possible presence of surface flaws.

As a function of the control signal generated for each tyre or semi-finished product, the control station 20 establishes how to direct the n tyres or semi-finished products received in inlet:
- k tyres or semi-finished products (with k<=n) are re-introduced in the production flow (e.g. they are sent to further test and/or verification stations or subjected to labelling, storing operations etc.), since they are deemed suitable;
- n-k tyres or semi-finished products are instead forwarded outside the production line, since at least preliminarily they were deemed unsuitable. Preferably the re-introduction of the k tyres or semi-finished products and the forwarding of the n-k tyres or semi-finished products is carried out in a time equal to the abovementioned predefined time range.

Preferably the n-k tyres forwarded outside the production flow are sent to a verification station 40 (outside the production line), where more in-depth analyses can be carried out to verify if the tyres must actually be definitively discarded. The production process consequently provides for a further verification operation 240 (carried out in the verification station 40) subsequent to the control operation only carried out on the n-k tyres or semi-finished products at least preliminarily deemed to be unsuitable.

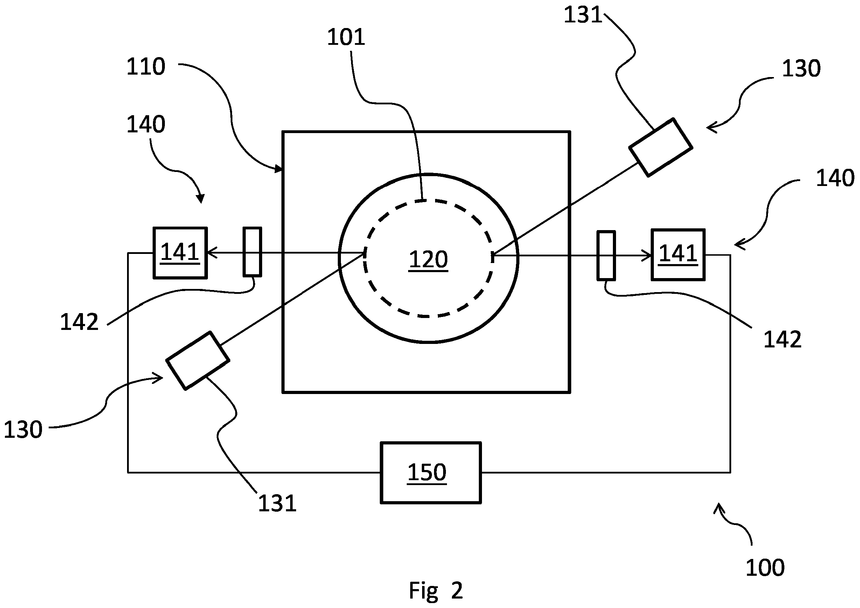

The control station 20 comprises at least one apparatus 100 for controlling tyres in a production line according to the method of the present invention. The apparatus 100 comprises a member 110 for moving a tyre 101 (shown in a dashed line in figure 2) having a horizontal support plane 120, such member adapted to rotate around an axis perpendicular to itself (in fig.2 perpendicular to the plane of the sheet), such axis coinciding with the cylindrical symmetry axis of the tyre.

The apparatus 100 further comprises a source 130 adapted to emit a light radiation for lighting a surface portion of the tyre or semi-finished product supported on the support plane, and, at a distance from the source, a detection system 140 adapted to detect the optical intensity of the light radiation reflected by the surface portion on a number N, with N ranging from 1 to 3, of pairs of polarisation states belonging to a group of three pairs of polarisation states corresponding to three pairs of points on Poincaré sphere, the three pairs of points being located at the opposite ends of three respective diameters of the Poincaré sphere orthogonal to each other.

In the example schematically shown in figure 2, corresponding to a number N equal to 1, the detection system comprises two digital cameras 141, each having a digital sensor adapted to detect the reflected light radiation, and each camera associated with a polariser 142 according to the present invention arranged upstream of the respective camera. The source 130 comprises, for example, two light sources 131 each associated with a respective camera. The two cameras are for example diametrically opposed with respect to the tyre. For N equal to 2, a possible solution (not shown) provides for two further cameras, each with the respective polariser and the respective light source, diametrically opposite each other along a diameter (i.e. in figure 2 vertically arranged) orthogonal to that (horizontal in figure 2) of the two cameras 141 shown in figure 2. For N equal to 3 (not shown), the six overall cameras can be distributed around the circumference of the tyre in a manner such that the angle subtended at the centre between the two adjacent cameras is equal to 60°. Typically each group formed by a camera with the respective polariser and the respective light source can be moved in space in a manner so as to be able to sequentially control both the surface of the tread and that of the accessible sidewall.

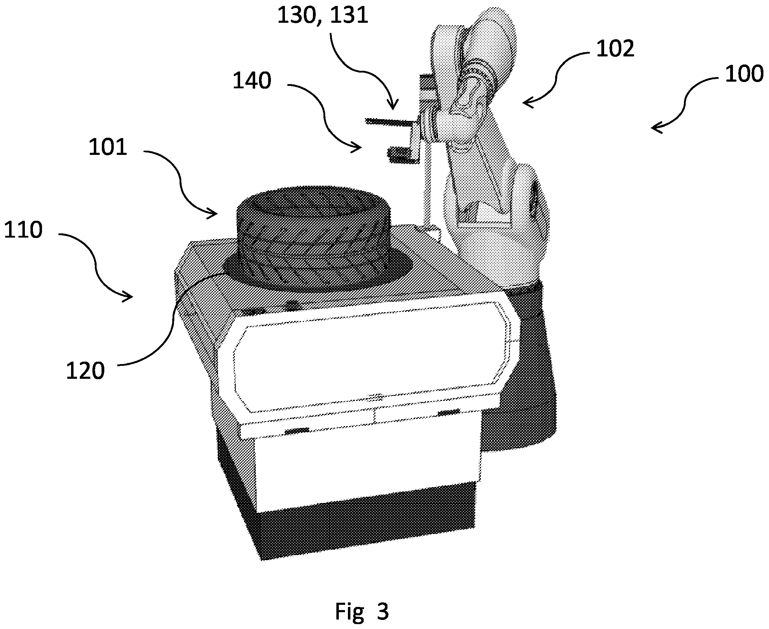

In the example schematically shown in figure 3, the apparatus 100 comprises a robotised arm 102 at whose free end the source 130 and the detection system 140 (represented only schematically) are rigidly mounted. For example, assuming N equal to 1, when subjected to one and only light source 131 the detection system 140 can comprise two cameras mounted side-by-side on the robotised arm with their respective polariser, or only one camera and, placed upstream before the same, a member (not shown) on which the two polarisers are mounted, such member configured for positioning only one polariser at a time in front of the camera.

The apparatus 100 further comprises a processing unit 150 adapted to receive a detection signal from the detection system, and configured for carrying out the abovementioned operations.

In operation, a tyre 101 is supported on the support plane 120 and subjected to a first complete rotation around the symmetry axis thereof in order to control the entire perimeter extension of the surface of the tread, and (possibly upon suitable repositioning of the light sources and the detection system) subjected to a second complete rotation around the symmetry axis thereof in order to control the entire perimeter extension of the surface of the accessible sidewall (the sidewall turned upward).

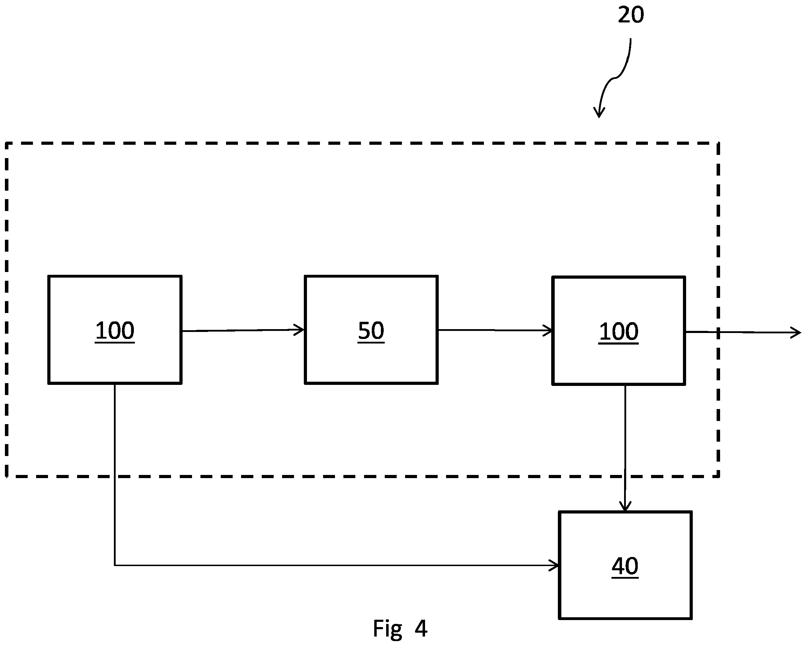

As shown in figure 4, the control station 20 for the tyres can comprise a pair of the aforesaid apparatuses 100 for controlling tyres in a production line and, interposed between the two apparatuses with reference to the production flow, a machine 50 for tilting the tyre around an axis orthogonal to the cylindrical symmetry axis of the tyre. In such a manner, it is possible to control the two sidewalls of the tyre respectively in the two apparatuses. It is observed that in a single control station 20, multiple apparatuses can also be present in accordance with the present invention and/or multiple pairs of apparatuses with a tilting machine interposed (which can be shared by multiple pairs of apparatuses). The flow of tyres or semi-finished products to be inspected can then be subdivided between the different control apparatuses.

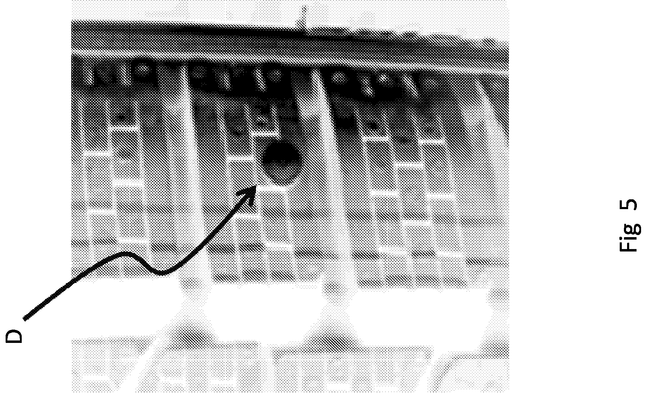

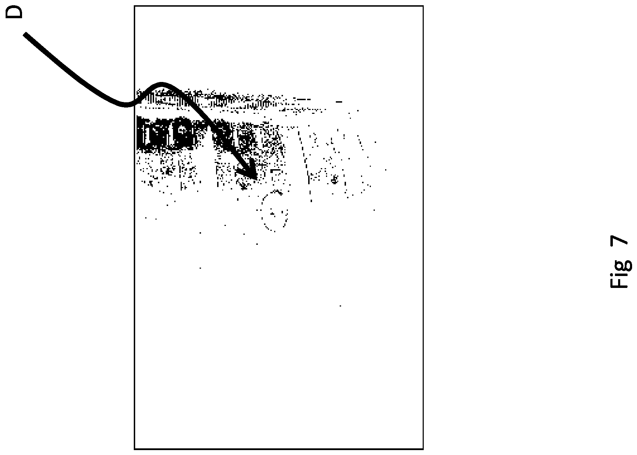

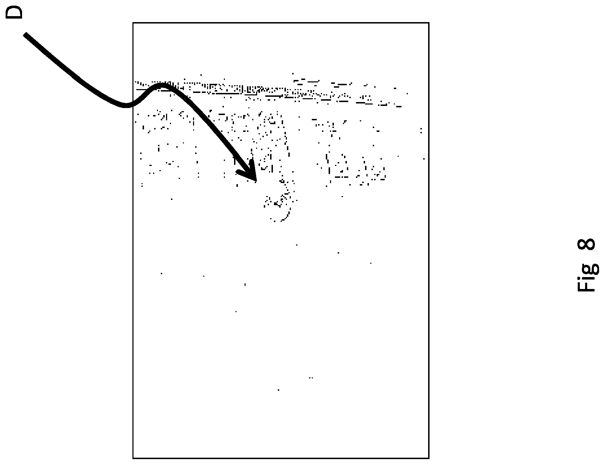

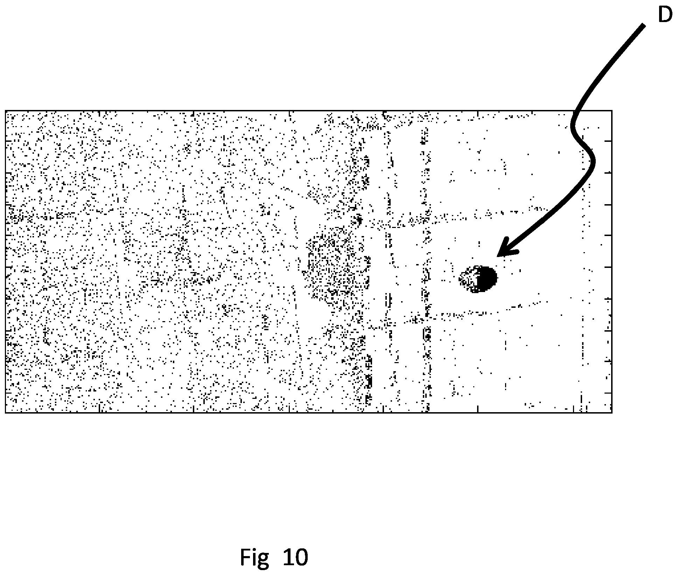

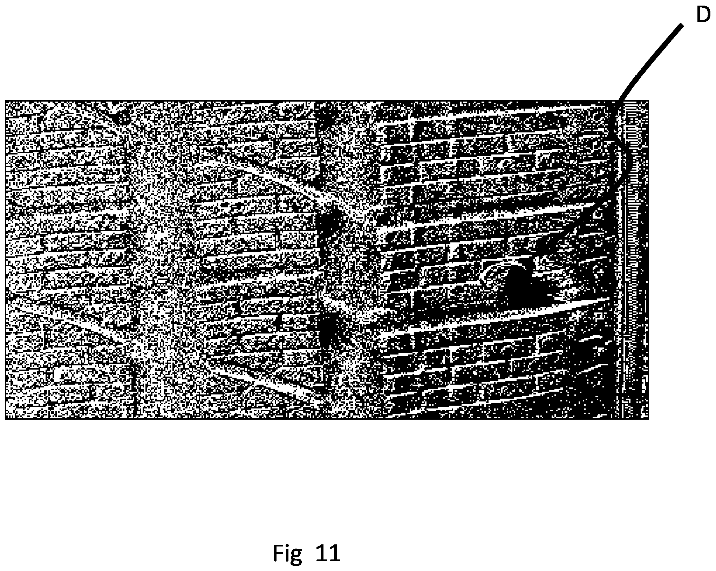

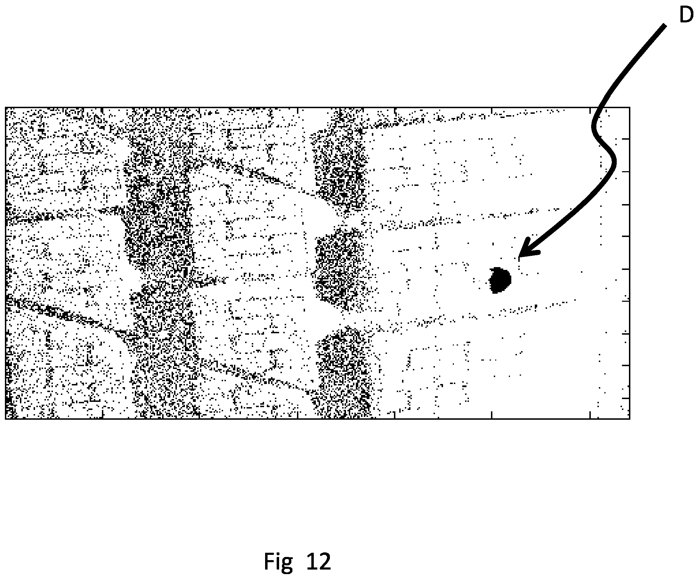

Figures 5 to 12 show an example of implementation of the method in accordance with the present invention. Figure 5 shows a normal visible-light photograph in grey tones and without any polarisation filter of a surface portion of a tyre, on which a foreign metallic body D has been intentionally included. The surface portion is lit with white light. The axis of the objective of the camera is normal to the plane tangent to the envelope of the surface of the tread at the centre of the tread. The angle between the axis of the objective and the direction of propagation of the radiation incident on the surface portion is equal to about 90°.

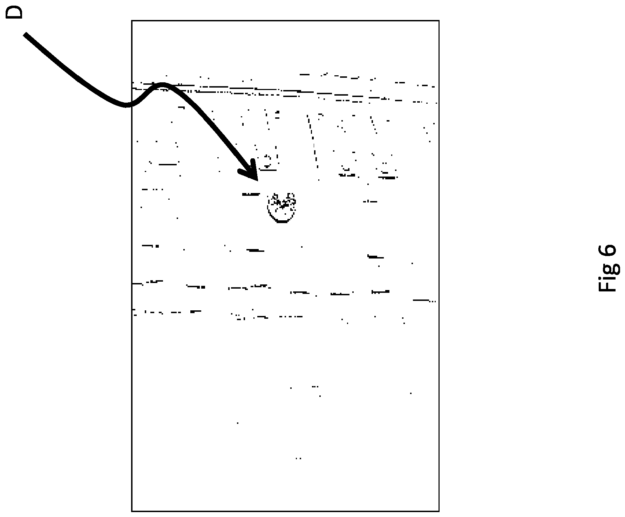

Figures 6, 7 and 8 show the respective image in black and white of the surface portion substantially coinciding with that of figure 5 obtained by associating each discrete point of the surface with a value representative respectively of the second, third and fourth Stokes component, Q, U and V, and after thresholding on the grey tones. The reference system for the main polarisation states is oriented with the horizontal and vertical linear polarisation axes, respectively parallel to the horizontal axis and vertical axis of the figures 6-12.

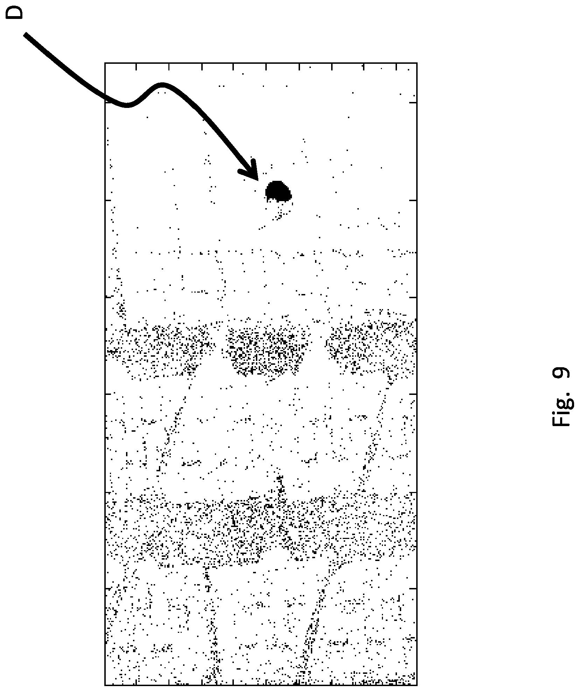

Figures 9-12 show the respective image in black and white of the same surface portion obtained by associating each discrete point of the surface with a value representative respectively of the degree of linear polarisation, DOLP, of the degree of polarisation, DOP, of the degree of circular polarisation, DOCP and of the polarisation angle, PSI, and after suitable thresholding on the grey tones.

As is seen, the flaw D clearly stands out in all the images, in particular in those of figures 6, 9, 10 and 12.

It is observed that the images, and/or for even more reason the respective detection signals, can be subjected to suitable processing algorithms (such as the algorithms that actuate a median filter or those known as "blob detection", which are able to recognise and isolate parts of the image with high pixel densities) in order to distinguish the flaw from the rest of the image.

## Claims

1. A method for controlling tyres or semi-finished products in a tyre production line (1), the method comprising:
- lighting with a light radiation at least one portion of the surface of a tyre or semi-finished product (101) to be inspected;
- detecting the optical intensity of the light radiation reflected by said surface portion on a number N of pairs of polarisation states belonging to a group of three pairs of polarisation states corresponding to three pairs of points on Poincaré sphere, the three pairs of points being located at the opposite ends of three respective diameters of the Poincaré sphere orthogonal to each other, said number N being equal to 1 or 2 or 3;
- calculating, on said surface portion, a number M of values representative of an equivalent number of components of the Stokes vector belonging to a subgroup of three components of the Stokes vector comprising a second component, Q, equal to the, or a function of the, difference of the two optical intensities of the light radiation reflected by the surface portion on the first pair of polarisation states, a third component, U, equal to the, or a function of the, difference of the two optical intensities of the light radiation reflected by the surface portion on the second pair of polarisation states and a fourth component, V, equal to the, or a function of the, difference of the two optical intensities of the light radiation reflected by the surface portion on the third pair of polarisation states, wherein said number M is equal to 1 or 2 or 3;
- generating, for said surface portion, a respective control signal representative of each of said values representative of said components of the Stokes vector;
- analysing said respective control signal on said surface portion for detecting the possible presence of surface flaws.

2. The method as claimed in claim 1, wherein the first pair of polarisation states consists of the horizontal and vertical linear polarisation, the second pair of polarisation states consists of the linear polarisation at +45° and - 45° and the third pair of polarisation states consists of the right and left circular polarisation,
wherein the optical intensity of the light radiation reflected by said surface portion on the first pair of polarisation states is detected by passing the reflected light radiation through a linear polariser aligned along the horizontal axis and through a linear polariser aligned along the vertical axis, respectively,
and/or wherein the optical intensity of the light radiation reflected by said surface portion on the second pair of polarisation states is detected by passing the reflected light radiation through a linear polariser aligned at +45° with respect to the horizontal and through a linear polariser aligned at -45° with respect to the horizontal, respectively,
and/or wherein the optical intensity of the light radiation reflected by said surface portion on the third pair of polarisation states is detected, as regards the right circular polarisation, by passing the reflected light radiation through a quarter-wave plate with the fast axis thereof positioned along the horizontal axis followed, downstream of the plate with respect to the direction of propagation of the light radiation, by a linear polariser aligned at +45° with respect to the horizontal axis and, as regards the left circular polarisation, by passing the reflected light radiation through a quarter-wave plate with the fast axis thereof positioned along the horizontal axis followed by a linear polariser aligned at -45° with respect to the horizontal axis.

3. The method as claimed in any one of the preceding claims, wherein said number N is equal to 1 and said number M is equal to 1 and wherein the pair of polarisation states on which the optical intensity of the reflected light radiation is detected is the first pair and said value representative of the Stokes components is representative of the second Stokes component, Q.

4. The method as claimed in any one of the preceding claims, wherein it is further provided for calculating on said surface portion a further value representative of a first component of the Stokes vector, I, equal to the, or function of the, sum of the two optical intensities of the light radiation reflected by the surface portion on the first pair of polarisation states.

5. The method as claimed in claim 4, wherein said number N of pairs of polarisation states is equal to 2 or 3 and said number M is equal to 2 or 3, and wherein said M values representative of an equivalent number of Stokes components comprise the value representative of the second component, Q and wherein it is provided to calculate on said surface portion, as a function of said M values representative of the Stokes components and said further value representative of the first Stokes component, at least one first polarisation parameter, preferably also at least one second polarisation parameter, more preferably also a third polarisation parameter, belonging to a group of polarisation parameters consisting of a degree of linear polarisation, DOLP=sqrt(Q²+U²)/I, of a polarisation angle, PSI=0.5*atan(U/Q) and of a degree of circular polarisation, DOCP= V/I.

6. The method as claimed in claim 5 wherein said number N is equal to three and said number M is equal to three, and wherein the method comprises calculating on said surface portion, as a function of said M values representative of the Stokes components and said further value representative of the first Stokes component, a polarisation degree, DOP=sqrt(Q²+U²+V²)/I.

7. The method as claimed in any one of the preceding claims, wherein the light radiation which lights at least one surface portion of the tyre or the semi-finished product is not polarised or it is at least partly not polarised.

8. The method as claimed in any one of the preceding claims, wherein in the operation for lighting a portion of the surface, the angle formed between the direction of propagation of the light radiation which lights the surface and the normal to the plane locally tangent to the envelope of the surface portion is greater than or equal to 30°, preferably greater than or equal to 45°.

9. The method as claimed in any one of the preceding claims, wherein it is provided to detect the optical intensity of the reflected light radiation by means of at least one digital camera having a digital optical sensor adapted to detect said reflected light radiation and an optical objective with an axis thereof, wherein the angle formed between said axis and the normal to the plane locally tangent to the envelope of the surface portion is smaller than or equal to 50°, preferably smaller than or equal to 30°, and wherein the angle formed by the direction of propagation of the light radiation which lights the portion of the surface and said axis of the objective of the camera is greater than or equal to 40°, preferably greater than or equal to 60°.

10. The method as claimed in any one of the preceding claims, further comprising discretising said surface portion in a finite number of points, wherein the operation/operations for detecting the optical intensity and/or generating a respective detection signal and/or calculating a number M of values and/or calculating the polarisation parameters and/or generating a respective control signal and/or analysing the respective control signal, is/are carried out for each point of the surface portion, the method further comprising creating, for each of said M values representative of the Stokes components and/or for each of said polarisation parameters, an image of said surface portion wherein each point of the surface is displayed as a function of the respective value of said representative value and/or, respectively, of said polarisation parameter.

11. A process (200) for producing tyres comprising at least one operation (210) for building green tyres, an operation (230) for vulcanising green tyres and an operation (220) for controlling tyres or semi-finished products according to the method as claimed in any one of the preceding claims.

12. An apparatus (100) for controlling tyres or semi-finished products (101) in a tyre production line (1), the apparatus comprising:
- a member (110) for moving a tyre or a semi-finished product having a support plane (120), preferably horizontal, adapted to rotate around an axis perpendicular to itself;
- a source (130) adapted to emit a light radiation for lighting a surface portion of the tyre or semi-finished product, when lying on the support plane, and, at a distance from said source, a detection system (140) adapted to detect the optical intensity of the light radiation reflected by said surface portion on a number N of pairs of polarisation states belonging to a group of three pairs of polarisation states corresponding to three pairs of points on Poincaré sphere, the three pairs of points being located at the opposite ends of three respective diameters of the Poincaré sphere orthogonal to each other, said number N being equal to 1 or 2 or 3, and to generate a respective detection signal; and
- a processing unit (150) adapted to receive, from the detection system, said detection signal and configured for the following functions:
- calculating, on said surface portion, a number M of values representative of an equivalent number of components of the Stokes vector belonging to a subgroup of three components of the Stokes vector comprising a second component, Q, equal to the, or function of the, difference of the two optical intensities of the light radiation reflected by the surface portion on the first pair of polarisation states, a third component, U, equal to the, or function of the, difference of the two optical intensities of the light radiation reflected by the surface portion on the second pair of polarisation states and a fourth component, V, equal to the, or function of the, difference of the two optical intensities of the light radiation reflected by the surface portion on the third pair of polarisation states, wherein said number M is equal to 1 or 2 or 3;
- generating, for said surface portion, a respective control signal representative of each of said M values representative of said components of the Stokes vector and
- analysing said respective control signal on said surface portion for detecting the possible presence of surface flaws.

13. An apparatus as claimed in the preceding claim, wherein said detection system comprises at least one digital camera (141) and a number 2N of polarisers (142), each structured for projecting the reflected light radiation on a respective state belonging to said N pairs of polarisation states, wherein some of, or all, the 2N polarisers can be positioned upstream of the camera with respect to the direction of propagation of the reflected light radiation, in a mutually exclusive manner.

14. An apparatus as claimed in claim 12, wherein said detection system comprises a number 2N of polarisers (142), each structured for projecting the reflected light radiation on a respective state belonging to said N pairs of polarisation states, wherein the detection system comprises a number 2N of digital cameras, each with a respective polariser different from the other polarisers,
wherein the 2N cameras are angularly uniformly distributed around the circumference of the tyre or semi-finished product, said source comprising a number 2N of light sources (131) each associated with a respective camera,
or wherein the 2N cameras are positioned in a single angular position with respect to the perimeter extension of the tyre or semi-finished product, and use the same single light source.

15. A line (1) for producing tyres comprising at least one work station (10), i.e. an area structured and configured for carrying out at least one operation for building green tyres, at least one vulcanisation station (30), i.e. an area structured and configured for carrying out a green tyres vulcanisation operation, and at least one control station (20) comprising an apparatus (100) for controlling tyres or semi-finished products as claimed in any one of claims 12 to 14, wherein the station for controlling tyres comprises a pair of said apparatuses (100) for controlling tyres in a production line and, interposed between the two apparatuses with reference to the production flow, a machine (50) for tilting the tyre around an axis orthogonal to the cylindrical symmetry axis of the tyre.

## Patentansprüche

1. Verfahren zur Kontrolle von Reifen oder halbfertigen Produkte in einer Reifenproduktionslinie (1), wobei das Verfahren umfasst:
- Beleuchten zumindest eines Abschnitts der Oberfläche eines Reifens oder halbfertigen Produkts (101), der/das überprüft werden soll, mit einer Lichtstrahlung;
- Erfassen der optischen Intensität der Lichtstrahlung, die durch den Oberflächenabschnitt bei einer Anzahl N von Paaren von Polarisationszuständen reflektiert wird, die zu einer Gruppe von drei Paaren von Polarisationszuständen entsprechend drei Paaren von Punkten an der Poincare-Kugel gehören, wobei die drei Paare von Punkten sich an entgegengesetzten Enden von drei jeweiligen Durchmessern der Poincare-Kugel befinden, die orthogonal zueinander stehen, wobei die Anzahl N gleich 1 oder 2 oder 3 ist;
- Berechnen, an dem Oberflächenabschnitt, einer Anzahl M von Werten, die eine äquivalente Anzahl von Komponenten des Stokes-Vektors repräsentieren, die zu einer Teilgruppe von drei Komponenten des Stokes-Vektors gehören, umfassend eine zweite Komponente, Q, gleich der oder eine Funktion der Differenz der zwei optischen Intensitäten der Lichtstrahlung, die von dem Oberflächenabschnitt bei dem ersten Paar von Polarisationszuständen reflektiert wird, eine dritte Komponente, U, gleich der oder eine Funktion der Differenz der zwei optischen Intensitäten der Lichtstrahlung, die von dem Oberflächenabschnitt bei dem zweiten Paar von Polarisationszuständen reflektiert wird, und eine vierte Komponente, V, gleich der oder eine Funktion der Differenz der zwei optischen Intensitäten der Lichtstrahlung, die von dem Oberflächenabschnitt bei dem dritten Paar von Polarisationszuständen reflektiert wird, wobei die Anzahl M gleich 1 oder 2 oder 3 ist;
- Erzeugen, für den Oberflächenabschnitt, eines jeweiligen Kontrollsignals, das jeden der Werte repräsentiert, welche die Komponenten des Stokes-Vektors repräsentieren;
- Analysieren des jeweiligen Kontrollsignals an dem Oberflächenabschnitt, um das mögliche Vorhandensein von Oberflächenfehlern zu erfassen.

2. Verfahren nach Anspruch 1, wobei das erste Paar von Polarisationszuständen aus der horizontalen und vertikalen linearen Polarisation besteht, das zweite Paar von Polarisationszuständen aus der linearen Polarisation bei +45° und - 45° besteht, und das dritte Paar von Polarisationszuständen aus der rechten und linken zirkularen Polarisation besteht,
wobei die optische Intensität der Lichtstrahlung, die von dem Oberflächenabschnitt bei dem ersten Paar von Polarisationszuständen reflektiert wird, erfasst wird, indem die reflektierte Lichtstrahlung jeweils durch einen linearen Polarisator, der entlang der horizontalen Achse ausgerichtet ist, und durch einen linearen Polarisator, der entlang der vertikalen Achse ausgerichtet ist, geführt wird,
und/oder wobei die optische Intensität der Lichtstrahlung, die von dem Oberflächenabschnitt bei dem zweiten Paar von Polarisationszuständen reflektiert wird, erfasst wird, indem die reflektierte Lichtstrahlung jeweils durch einen linearen Polarisator, der in +45° in Bezug auf die Horizontale ausgerichtet ist, und durch einen linearen Polarisator, der in -45° in Bezug auf die Horizontale ausgerichtet ist, geführt wird,
und/oder wobei die optische Intensität der Lichtstrahlung, die von dem Oberflächenabschnitt bei dem dritten Paar von Polarisationszuständen reflektiert wird, erfasst wird, indem, im Fall der rechten zirkularen Polarisation, die reflektierte Lichtstrahlung durch ein Lambda-Viertel-Plättchen, dessen feste Achse entlang der horizontalen Achse positioniert ist, und, dem Plättchen in Bezug auf die Ausbreitungsrichtung der Lichtstrahlung nachgelagert, gefolgt von einem linearen Polarisator, der mit +45° in Bezug auf die horizontale Achse ausgerichtet ist, geführt wird, und, im Fall der linken zirkularen Polarisation, die reflektierte Lichtstrahlung durch ein Lambda-Viertel-Plättchen, dessen feste Achse entlang der horizontalen Achse positioniert ist, und gefolgt von einem linearen Polarisator, der mit -45° in Bezug auf die horizontale Achse ausgerichtet ist, geführt wird.

3. Verfahren nach einem der vorhergehenden Ansprüche, wobei die Anzahl N gleich 1 ist und die Anzahl M gleich 1 ist, und wobei das Paar von Polarisationszuständen, bei welchem die optische Intensität der reflektierten Lichtstrahlung erfasst wird, das erste Paar ist, und der Wert, der die Stokes-Komponenten repräsentiert, die zweite Stokes-Komponente Q repräsentiert.

4. Verfahren nach einem der vorhergehenden Ansprüche, wobei ferner vorgesehen ist, an dem Oberflächenabschnitt einen weiteren Wert zu berechnen, der eine erste Komponente des Stokes-Vektors, I, repräsentiert, die gleich der oder eine Funktion der Summe der zwei optischen Intensitäten der Lichtstrahlung ist, die von dem Oberflächenabschnitt bei dem ersten Paar von Polarisationszuständen reflektiert wird.

5. Verfahren nach Anspruch 4, wobei die Anzahl N von Paaren von Polarisationszuständen gleich 2 oder 3 ist und die Anzahl M gleich 2 oder 3 ist, und wobei die M Werte, welche eine äquivalente Anzahl von Stokes-Komponenten repräsentieren, den Wert umfassen, der die zweite Komponente, Q, repräsentiert, und wobei vorgesehen ist, an dem Oberflächenabschnitt als eine Funktion der M Werte, welche die Stokes-Komponenten repräsentieren, und des weiteren Werts, der die erste Stokes-Komponente repräsentiert, zumindest einen ersten Polarisations-Parameter, vorzugsweise auch zumindest einen zweiten Polarisations-Parameter, noch bevorzugter auch einen dritten Polarisations-Parameter zu berechnen, die zu einer Gruppe von Polarisations-Parametern gehören, die aus einem Grad der linearen Polarisation, DOLP = sqrt (Q² + U²) / I, einem Polarisationswinkel, PSl = 0,5 * atan (U / Q) und aus einem Grad der zirkularen Polarisation, DOCP = V / I, bestehen.

6. Verfahren nach Anspruch 5, wobei die Anzahl N gleich drei ist und die Anzahl M gleich drei ist, und wobei das Verfahren umfasst, an dem Oberflächenabschnitt als eine Funktion der M Werte, welche die Stokes-Komponenten repräsentieren, und des weiteren Werts, der die erste Stokes-Komponente repräsentiert, zumindest einen Polarisationsgrad DOP = sqrt (Q² + U² + V²) / I zu berechnen.

7. Verfahren nach einem der vorhergehenden Ansprüche, wobei die Lichtstrahlung, welche zumindest einen Oberflächenabschnitt des Reifens oder des halbfertigen Produkts beleuchtet, nicht polarisiert oder zumindest zum Teil nicht polarisiert ist.

8. Verfahren nach einem der vorhergehenden Ansprüche, wobei in dem Vorgang zum Beleuchten eines Abschnitts der Oberfläche der Winkel, der zwischen der Ausbreitungsrichtung der Lichtstrahlung, welche die Oberfläche beleuchtet, und der Senkrechten auf die Ebene gebildet wird, die lokal tangential zu der Hüllkurve des Oberflächenabschnitts liegt, größer als oder gleich 30°, vorzugsweise größer als oder gleich 45° ist.

9. Verfahren nach einem der vorhergehenden Ansprüche, wobei vorgesehen ist, die optische Intensität der reflektierten Lichtstrahlung mittels zumindest einer Digitalkamera zu erfassen, die einen digitalen optischen Sensor, der dazu ausgestaltet ist, die reflektierte Lichtstrahlung zu erfassen, und ein optisches Objektiv mit einer Achse davon aufweist, wobei der Winkel, der zwischen der Achse und der Senkrechten auf die Ebene gebildet wird, die lokal tangential zu der Hüllkurve des Oberflächenabschnitts liegt, kleiner als oder gleich 50°, vorzugsweise kleiner als oder gleich 30° ist, und wobei der Winkel, der zwischen der Ausbreitungsrichtung der Lichtstrahlung, welche den Abschnitt der Oberfläche beleuchtet, und der Achse des Objektivs der Kamera größer als oder gleich 40°, vorzugsweise größer als oder gleich 60° ist.

10. Verfahren nach einem der vorhergehenden Ansprüche, ferner umfassend das Diskretisieren des Oberflächenabschnitts in eine finite Anzahl von Punkten, wobei der Vorgang/die Vorgänge zum Erfassen der optischen Intensität und/oder zum Erzeugen des jeweiligen Erfassungssignals und/oder zum Berechnen einer Anzahl M von Werten und/oder zum Berechnen der Polarisations-Parameter und/oder zum Erzeugen eines jeweiligen Kontrollsignals und/oder zum Analysieren des jeweiligen Kontrollsignals für jeden Punkt des Oberflächenabschnitts ausgeführt wird/werden, wobei das Verfahren ferner das Erzeugen eines Bildes des Oberflächenabschnitts , für jeden der M Werte, welche die Stokes-Komponenten repräsentieren, und/oder für jeden der Polarisations-Parameter umfasst, wobei jeder Punkt der Oberfläche als eine Funktion des jeweiligen Werts des repräsentierten Werts und/oder des jeweiligen Polarisations-Parameters angezeigt wird.

11. Prozess (200) zur Herstellung von Reifen, umfassend zumindest einen Vorgang (210) zur Fertigung von Rohreifen, einen Vorgang (230) zum Vulkanisieren von Rohreifen und einen Vorgang (220) zur Kontrolle von Reifen oder halbfertigen Produkten gemäß dem Verfahren nach einem der vorhergehenden Ansprüche.

12. Vorrichtung (100) zur Kontrolle von Reifen oder halbfertigen Produkten (101) in einer Reifenproduktionslinie (1), wobei die Vorrichtung umfasst:
- ein Element (110) zum Bewegen eines Reifens oder eines halbfertigen Produkts, mit einer Trägerebene (120), vorzugsweise horizontal, die dazu geeignet ist, sich um eine senkrecht darauf stehende Achse zu drehen;
- eine Quelle (130), die dazu geeignet ist, eine Lichtstrahlung auszusenden, um einen Oberflächenabschnitt des Reifens oder des halbfertigen Produkts zu beleuchten, wenn er/es auf der Trägerebene liegt, und, in einem Abstand von der Quelle, ein Erfassungssystem (140), das dazu geeignet ist, die optische Intensität der Lichtstrahlung, die durch den Oberflächenabschnitt bei einer Anzahl N von Paaren von Polarisationszuständen reflektiert wird, die zu einer Gruppe von drei Paaren von Polarisationszuständen entsprechend drei Paaren von Punkten an der Poincare-Kugel gehören, wobei die drei Paare von Punkten sich an entgegengesetzten Enden von drei jeweiligen Durchmessern der Poincare-Kugel befinden, die orthogonal zueinander stehen, wobei die Anzahl N gleich 1 oder 2 oder 3 ist, und ein jeweiliges Erfassungssignal zu erzeugen; und
- eine Verarbeitungseinheit (150), die dazu geeignet ist, von dem Erfassungssystem das Erfassungssignal zu empfangen, und für die folgenden Funktionen ausgestaltet ist:
- Berechnen, an dem Oberflächenabschnitt, einer Anzahl M von Werten, die eine äquivalente Anzahl von Komponenten des Stokes-Vektors repräsentieren, die zu einer Teilgruppe von drei Komponenten des Stokes-Vektors gehören, umfassend eine zweite Komponente, Q, gleich der oder eine Funktion der Differenz der zwei optischen Intensitäten der Lichtstrahlung, die von dem Oberflächenabschnitt bei dem ersten Paar von Polarisationszuständen reflektiert wird, eine dritte Komponente, U, gleich der oder eine Funktion der Differenz der zwei optischen Intensitäten der Lichtstrahlung, die von dem Oberflächenabschnitt bei dem zweiten Paar von Polarisationszuständen reflektiert wird, und eine vierte Komponente, V, gleich der oder eine Funktion der Differenz der zwei optischen Intensitäten der Lichtstrahlung, die von dem Oberflächenabschnitt bei dem dritten Paar von Polarisationszuständen reflektiert wird, wobei die Anzahl M gleich 1 oder 2 oder 3 ist;
- Erzeugen, für den Oberflächenabschnitt, eines jeweiligen Kontrollsignals, das jeden der M Werte repräsentiert, welche die Komponenten des Stokes-Vektors repräsentieren, und
- Analysieren des jeweiligen Kontrollsignals an dem Oberflächenabschnitt, um das mögliche Vorhandensein von Oberflächenfehlern zu erfassen.

13. Vorrichtung nach dem vorhergehenden Anspruch, wobei das Erfassungssystem zumindest eine Digitalkamera (141) und eine Anzahl 2N von Polarisatoren (142) umfasst, die jeweils dazu aufgebaut sind, die bei einem jeweiligen Zustand, der zu den N Paaren von Polarisationszuständen gehört, reflektierte Lichtstrahlung auf einander ausschließende Weise zu projizieren, wobei einige, oder alle, der 2N Polarisatoren der Kamera in Bezug auf die Ausbreitungsrichtung der reflektierten Lichtstrahlung vorgelagert positioniert sein können.

14. Vorrichtung nach Anspruch 12, wobei das Erfassungssystem eine Anzahl 2N von Polarisatoren (142) umfasst, die jeweils dazu aufgebaut sind, die bei einem jeweiligen Zustand, der zu den N Paaren von Polarisationszuständen gehört, reflektierte Lichtstrahlung zu projizieren, wobei das Erfassungssystem eine Anzahl 2N von Digitalkameras umfasst, jede mit einem jeweiligen Polarisator, der sich von den anderen Polarisatoren unterscheidet,
wobei die 2N Kameras winkelmäßig gleichförmig um den Umfang des Reifens oder halbfertigen Produkts herum verteilt sind, wobei die Quelle eine Anzahl 2N von Lichtquellen (131) umfasst, die jeweils einer jeweiligen Kamera zugeordnet sind,
oder wobei die 2N Kameras in einer einzelnen Winkelposition in Bezug auf die Umfangserstreckung des Reifens oder halbfertigen Produkts positioniert sind und dieselbe einzelne Lichtquelle verwenden.

15. Linie (1) zur Produktion von Reifen, umfassend zumindest eine Arbeitsstation (10), d. h., einen Bereich, der dazu aufgebaut und ausgestaltet ist, zumindest einen Vorgang zur Fertigung von Rohreifen auszuführen, zumindest eine Vulkanisierstation (30), d. h., einen Bereich, der dazu aufgebaut und ausgestaltet ist, einen Vorgang zur Vulkanisierung von Rohreifen auszuführen, und zumindest eine Kontrollstation (20) umfassend eine Vorrichtung (100) zur Kontrolle von Reifen oder halbfertigen Produkten nach einem der Ansprüche 12 bis 14, wobei die Station zur Kontrolle von Reifen ein Paar der Vorrichtungen (100) zur Kontrolle von Reifen in einer Produktionslinie und, in Bezug auf den Produktionsfluss zwischen den zwei Vorrichtungen angeordnet, eine Maschine (50) zum Kippen des Reifens um eine Achse senkrecht auf die zylindrische Symmetrieachse des Reifens umfasst.

## Revendications

1. Procédé de contrôle de pneus ou de produits semi-finis dans une chaîne de production de pneus (1), le procédé comprenant le fait :
- d'éclairer avec un rayonnement lumineux au moins une partie de la surface d'un pneu ou d'un produit semi-fini (101) à inspecter ;
- de détecter l'intensité optique du rayonnement lumineux réfléchi par ladite partie de surface sur un nombre N de paires d'états de polarisation appartenant à un groupe de trois paires d'états de polarisation correspondant à trois paires de points sur la sphère de Poincaré, les trois paires de points étant situées au niveau des extrémités opposées de trois diamètres respectifs de la sphère de Poincaré orthogonaux entre eux, ledit nombre N étant égal à 1 ou 2 ou 3 ;
- de calculer, sur ladite partie de surface, un nombre M de valeurs représentant un nombre équivalent de composantes du vecteur de Stokes appartenant à un sous-groupe de trois composantes du vecteur de Stokes comprenant une deuxième composante, Q, égale à, ou une fonction de, la différence des deux intensités optiques du rayonnement lumineux réfléchi par la partie de surface sur la première paire d'états de polarisation, une troisième composante, U, égale à, ou une fonction de, la différence des deux intensités optiques du rayonnement lumineux réfléchi par la partie de surface sur la deuxième paire d'états de polarisation et une quatrième composante, V, égale à, ou une fonction de, la différence des deux intensités optiques du rayonnement lumineux réfléchi par la partie de surface sur la troisième paire d'états de polarisation, où ledit nombre M est égal à 1 ou 2 ou 3 ;
- de générer, pour ladite partie de surface, un signal de contrôle respectif représentant chacune desdites valeurs représentant lesdites composantes du vecteur de Stokes ;
- d'analyser ledit signal de contrôle respectif sur ladite partie de surface pour détecter la présence éventuelle de défauts de surface.

2. Procédé tel que revendiqué dans la revendication 1, dans lequel la première paire d'états de polarisation est constituée de la polarisation linéaire horizontale et verticale, la deuxième paire d'états de polarisation est constituée de la polarisation linéaire à +45° et -45° et la troisième paire d'états de polarisation est constituée de la polarisation circulaire droite et gauche,
dans lequel l'intensité optique du rayonnement lumineux réfléchi par ladite partie de surface sur la première paire d'états de polarisation est détectée en faisant passer le rayonnement lumineux réfléchi à travers un polariseur linéaire aligné le long de l'axe horizontal et à travers un polariseur linéaire aligné le long de l'axe vertical, respectivement,
et/ou dans lequel l'intensité optique du rayonnement lumineux réfléchi par ladite partie de surface sur la deuxième paire d'états de polarisation est détectée en faisant passer le rayonnement lumineux réfléchi à travers un polariseur linéaire aligné à +45° par rapport à l'horizontale et à travers un polariseur linéaire aligné à -45° par rapport à l'horizontale, respectivement,
et/ou dans lequel l'intensité optique du rayonnement lumineux réfléchi par ladite partie de surface sur la troisième paire d'états de polarisation est détectée, en ce qui concerne la polarisation circulaire droite, en faisant passer le rayonnement lumineux réfléchi à travers une lame quart d'onde avec son axe rapide positionné le long de l'axe horizontal suivi, en aval de la lame par rapport à la direction de propagation du rayonnement lumineux, d'un polariseur linéaire aligné à +45° par rapport à l'axe horizontal et, en ce qui concerne la polarisation circulaire gauche, en faisant passer le rayonnement lumineux réfléchi à travers une lame quart d'onde avec son axe rapide positionné le long de l'axe horizontal suivi d'un polariseur linéaire aligné à -45° par rapport à l'axe horizontal.

3. Procédé tel que revendiqué dans l'une quelconque des revendications précédentes, dans lequel ledit nombre N est égal à 1 et ledit nombre M est égal à 1 et dans lequel la paire d'états de polarisation sur laquelle l'intensité optique du rayonnement lumineux réfléchi est détectée est la première paire et ladite valeur représentant les composantes de Stokes représente la deuxième composante de Stokes, Q.

4. Procédé tel que revendiqué dans l'une quelconque des revendications précédentes, dans lequel il est en outre prévu de calculer, sur ladite partie de surface, une valeur supplémentaire représentant une première composante du vecteur de Stokes, I, égale à, ou une fonction de, la somme des deux intensités optiques du rayonnement lumineux réfléchi par la partie de surface sur la première paire d'états de polarisation.

5. Procédé tel que revendiqué dans la revendication 4, dans lequel ledit nombre N de paires d'états de polarisation est égal à 2 ou 3 et ledit nombre M est égal à 2 ou 3, et dans lequel lesdites M valeurs représentant un nombre équivalent de composantes de Stokes comprennent la valeur représentant la deuxième composante, Q et dans lequel il est prévu de calculer, sur ladite partie de surface, en fonction desdites M valeurs représentant les composantes de Stokes et de ladite valeur supplémentaire représentant la première composante de Stokes, au moins un premier paramètre de polarisation, de préférence également au moins un deuxième paramètre de polarisation, plus préférentiellement également un troisième paramètre de polarisation, appartenant à un groupe de paramètres de polarisation constitué d'un degré de polarisation linéaire, DOLP=sqrt (Q²+U²) /I, d'un angle de polarisation, PSI=0,5*atan(U/Q) et d'un degré de polarisation circulaire, DOCP=V/I.

6. Procédé tel que revendiqué dans la revendication 5 dans lequel ledit nombre N est égal à trois et ledit nombre M est égal à trois, et dans lequel le procédé comprend le calcul, sur ladite partie de surface, en fonction desdites M valeurs représentant les composantes de Stokes et de ladite valeur supplémentaire représentant la première composante de Stokes, d'un degré de polarisation, DOP=sqrt (Q²+U²+V²) /I.

7. Procédé tel que revendiqué dans l'une quelconque des revendications précédentes, dans lequel le rayonnement lumineux qui éclaire au moins une partie de surface du pneu ou du produit semi-fini n'est pas polarisé ou il est au moins en partie non polarisé.

8. Procédé tel que revendiqué dans l'une quelconque des revendications précédentes, dans lequel, dans l'opération d'éclairage d'une partie de la surface, l'angle formé entre la direction de propagation du rayonnement lumineux qui éclaire la surface et la normale au plan localement tangent à l'enveloppe de la partie de surface est supérieur ou égal à 30°, de préférence supérieur ou égal à 45°.

9. Procédé tel que revendiqué dans l'une quelconque des revendications précédentes, dans lequel il est prévu de détecter l'intensité optique du rayonnement lumineux réfléchi au moyen d'au moins une caméra numérique ayant un capteur optique numérique adapté pour détecter ledit rayonnement lumineux réfléchi et un objectif optique avec un axe de celui-ci, dans lequel l'angle formé entre ledit axe et la normale au plan localement tangent à l'enveloppe de la partie de surface est inférieur ou égal à 50°, de préférence inférieur ou égal à 30°, et dans lequel l'angle formé par la direction de propagation du rayonnement lumineux qui éclaire la partie de la surface et ledit axe de l'objectif de la caméra est supérieur ou égal à 40°, de préférence supérieur ou égal à 60°.

10. Procédé tel que revendiqué dans l'une quelconque des revendications précédentes, comprenant en outre la discrétisation de ladite partie de surface en un nombre fini de points, dans lequel l'opération/les opérations pour détecter l'intensité optique et/ou générer un signal de détection respectif et/ou calculer un nombre M de valeurs et/ou calculer les paramètres de polarisation et/ou générer un signal de contrôle respectif et/ou analyser le signal de contrôle respectif, est/sont effectuée(s) pour chaque point de la partie de surface, le procédé comprenant en outre la création, pour chacune desdites M valeurs représentant les composantes de Stokes et/ou pour chacun desdits paramètres de polarisation, d'une image de ladite partie de surface dans laquelle chaque point de la surface est affiché en fonction de la valeur respective de ladite valeur représentative et/ou, respectivement, dudit paramètre de polarisation.

11. Processus (200) de production de pneus comprenant au moins une opération (210) de construction de pneus crus, une opération (230) de vulcanisation de pneus crus et une opération (220) de contrôle de pneus ou de produits semi-finis selon le procédé tel que revendiqué dans l'une quelconque des revendications précédentes.

12. Appareil (100) de contrôle de pneus ou de produits semi-finis (101) dans une chaîne de production de pneus (1), l'appareil comprenant :
- un élément (110) pour déplacer un pneu ou un produit semi-fini ayant un plan de support (120), de préférence horizontal, adapté pour tourner autour d'un axe perpendiculairement à lui-même ;
- une source (130) adaptée pour émettre un rayonnement lumineux pour éclairer une partie de surface du pneu ou du produit semi-fini, lorsqu'il se trouve sur le plan de support, et, à distance de ladite source, un système de détection (140) adapté pour détecter l'intensité optique du rayonnement lumineux réfléchi par ladite partie de surface sur un nombre N de paires d'états de polarisation appartenant à un groupe de trois paires d'états de polarisation correspondant à trois paires de points sur la sphère de Poincaré, les trois paires de points étant situées au niveau des extrémités opposées de trois diamètres respectifs de la sphère de Poincaré orthogonaux entre eux, ledit nombre N étant égal à 1 ou 2 ou 3, et pour générer un signal de détection respectif ; et
- une unité de traitement (150) adaptée pour recevoir, à partir du système de détection, ledit signal de détection et configurée pour les fonctions suivantes consistant :
- à calculer, sur ladite partie de surface, un nombre M de valeurs représentant un nombre équivalent de composantes du vecteur de Stokes appartenant à un sous-groupe de trois composantes du vecteur de Stokes comprenant une deuxième composante, Q, égale à, ou une fonction de, la différence des deux intensités optiques du rayonnement lumineux réfléchi par la partie de surface sur la première paire d'états de polarisation, une troisième composante, U, égale à, ou une fonction de, la différence des deux intensités optiques du rayonnement lumineux réfléchi par la partie de surface sur la deuxième paire d'états de polarisation et une quatrième composante, V, égale à, ou une fonction de, la différence des deux intensités optiques du rayonnement lumineux réfléchi par la partie de surface sur la troisième paire d'états de polarisation, où ledit nombre M est égal à 1 ou 2 ou 3 ;
- à générer, pour ladite partie de surface, un signal de contrôle respectif représentant chacune desdites M valeurs représentant lesdites composantes du vecteur de Stokes et
- à analyser ledit signal de contrôle respectif sur ladite partie de surface pour détecter la présence éventuelle de défauts de surface.

13. Appareil tel que revendiqué dans la revendication précédente, dans lequel ledit système de détection comprend au moins une caméra numérique (141) et un nombre 2N de polariseurs (142), chacun structuré pour projeter le rayonnement lumineux réfléchi sur un état respectif appartenant auxdites N paires d'états de polarisation, où la totalité ou une partie des polariseurs 2N peut être positionnée en amont de la caméra par rapport à la direction de propagation du rayonnement lumineux réfléchi, d'une manière mutuellement exclusive.

14. Appareil tel que revendiqué dans la revendication 12, dans lequel ledit système de détection comprend un nombre 2N de polariseurs (142), chacun structuré pour projeter le rayonnement lumineux réfléchi sur un état respectif appartenant auxdites N paires d'états de polarisation, où le système de détection comprend un nombre 2N de caméras numériques, chacune munie d'un polariseur respectif différent des autres polariseurs,
dans lequel les 2N caméras sont réparties de manière angulairement uniforme autour de la circonférence du pneu ou du produit semi-fini, ladite source comprenant un nombre 2N de sources lumineuses (131) associées chacune à une caméra respective,
ou dans lequel les 2N caméras sont positionnées dans une position angulaire unique par rapport à l'extension du périmètre du pneu ou du produit semi-fini, et utilisent la même source lumineuse unique.

15. Chaîne (1) de production de pneus comprenant au moins un poste de travail (10), c'est-à-dire une zone structurée et configurée pour réaliser au moins une opération de construction de pneus crus, au moins un poste de vulcanisation (30), c'est-à-dire une zone structurée et configurée pour réaliser une opération de vulcanisation de pneus crus, et au moins un poste de contrôle (20) comprenant un appareil (100) pour contrôler des pneus ou des produits semi-finis tel que revendiqué dans l'une quelconque des revendications 12 à 14, où le poste de contrôle de pneus comprend une paire desdits appareils (100) pour contrôler des pneus dans une chaîne de production et, interposée entre les deux appareils en référence au flux de production, une machine (50) pour incliner le pneu autour d'un axe orthogonal à l'axe de symétrie cylindrique du pneu.
